# EUROPÄISCHE PATENTANMELDUNG

(11) **EP 1 308 659 A1**
(43) Veröffentlichungstag der Anmeldung: **07.05.2003**
(21) Anmeldenummer: 02024163.4
(22) Anmeldetag: 30.10.2002
(51) Int. Cl.: F16K 31/06

(54) **Elektromagnetventil, insbesondere Getränkeablaufventil**

(30) Priorität: 03.11.2001 DE 20117945 U
(71) Anmelder: A. und K. Müller GmbH & Co. KG, 40595 Düsseldorf (DE)
(72) Erfinder: Glaus, Uwe, 40593 Düsseldorf (DE)
(74) Vertreter: Feder, Wolf-Dietrich, Dr. Dipl.-Phys.

(57) **Zusammenfassung**

Ein Elektromagnetventil, insbesondere ein Getränkeablaufventil, mit einem Ventilgehäuse (1), in dem eine Ventilkammer (K) angeordnet ist, die mit einem Zuflußkanal direkt und mit einem Abflußkanal über einen Ventilsitz verbunden ist. Am Ventilgehäuse ist ein Magnetsystem (M) angeordnet mit einer Magnetspule, in welcher ein unter Federkraft stehender Magnetanker (6) geführt ist, der an seinem dem Ventilsitz zugekehrten Ende einen Ventilteller (4) trägt. Der Ventilsitz ist als zylindrisches Rohrstück (2) ausgebildet, das an dem dem Ventilteller (4) zugewandten Ende aus einem weichen, gummielastischen Material besteht oder mit einem solchen Material umkleidet ist. Der Ventilteller (4) ist als beim Schließen des Ventils mit seiner Spitze in das zylindrische Rohrstück (2) eintauchender Dichtungskegel ausgebildet, der aus einem Material besteht, das eine wesentlich größere Härte besitzt als das Material am ihm gegenüberliegenden Ende des Ventilsitzes.

## Beschreibung

Die Erfindung betrifft ein Elektromagnetventil, insbesondere ein Getränkeablaufventil, mit einem Ventilgehäuse, in dem eine Ventilkammer angeordnet ist, die mit einem Zuflußkanal direkt und mit einem Abflußkanal über einen Ventilsitz verbunden ist und mit einem am Ventilgehäuse angeordneten Magnetsystem mit einer Magnetspule, in welcher ein unter Federkraft stehender Magnetanker geführt ist, der an seinem dem Ventilsitz zugekehrten Ende einen Ventilteller trägt.

Bei bekannten Ventilen dieser Bauart besteht im allgemeinen der Ventilsitz aus hartem Material, z.B. Kunststoff oder Keramik, und der Ventilteller aus einem weichen, elastomeren Material. Ein Nachteil derartiger Ventile besteht darin, daß sie beim Betrieb mit Leitungswasser bei hohen Wassertemperaturen, wie dies im Heißgetränkebereich üblich ist, zur Verkalkung neigen. Diese Verkalkung bildet sich u.a. massiv im Bereich des Ventilsitzes aus und führt damit sehr schnell zu einer Beeinträchtigung der Sitzfläche und als Folge hiervon zu undichten Ventilen, die dann durch frühe Serviceeinsätze gewartet und.instandgesetzt werden müssen.

In EP 0 300 280 A1 ist ein Elektromagnetventil beschrieben, das insbesondere als Auslaufventil für Brühwasser gedacht ist und bei dem Kalkablagerungen im Bereich zwischen Ventilteller und Ventilsitz dadurch verhindert werden, daß der Ventilsitz eine längs seines inneren Umfangs koaxial zur Achse des Ventilschaftes angeordnete Folie aus Polytetrafluoräthylen enthält, die an der dem Ventilteller zugewandten Seite die Oberfläche des Ventilsitzes um einen vorgegebenen Längenbetrag überragt. Der Ventilteller besteht aus einem gummilastischen Material, das eine geringere Härte aufweist als die Folie, und seine dem Ventilsitz zugekehrte Oberfläche schließt mindestens an den Auflagebereichen in radialer Richtung mit der Schließebene spitze Winkel ein. Diese Ausbildung hat zur Folge, daß der Ventilteller mit einer spezifisch hohen Flächenpressung auf dem Ventilsitz aufliegt und durch das elastische Verhalten des Materials des Ventiltellers eine Relativbewegung entsteht, durch die eventuell haftende Kalkpartikel, die sich an der Innenseite des Ventilsitzes ansetzen wollen, selbsttätig abgelöst werden.

Der Erfindung liegt die Aufgabe zugrunde, ein Ventil mit den eingangs und im Oberbegriff des Patentanspruchs 1 angegebenen Merkmalen so auszubilden, daß mit einfachsten konstruktiven Mitteln in noch wirksamerer Weise jede Kalkablagerung am Ventilsitz verhindert wird.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Die Erfindung geht von dem Grundgedanken aus, das bei bekannten Ventilen verwendete Prinzip, den Ventilteller aus weichem Material auszubilden, während der Ventilsitz aus hartem Material besteht, umzukehren. Beim erfindungsgemäßen Ventil besteht der Ventilteller aus einem Dichtungskegel aus hartem Material, der mit der Spitze in Fließrichtung zeigend beim Schließen in den Ventilsitz eintaucht. Dieser ist als zylindrisches Rohrstück ausgebildet, das mindestens an dem dem Dichtungskegel zugewandten Ende aus einem weichen, gummielastischen Material besteht oder mit einem solchen Material umkleidet ist. Die beim Schließen des Ventils im Ventilsitz auftretende Verformungsenergie, die aus der kinetischen Energie des bewegten Dichtungskegels erzielt wird, führt zu einem Absprengen von aufgebauten Kalkschichten an der weichen Kontur des Ventilsitzes. Durch entsprechende Ausbildung des Dichtungskegels mit einem entsprechend angepaßten Kegelwinkel kann hier ein sehr hoher Wirkungsgrad erzielt werden, so daß praktisch keinerlei Kalkablagerungen mehr auftreten.

Im folgenden wird anhand der beigefügten Zeichnungen ein Ausführungsbeispiel für das erfindungsgemäße Elektromagnetventil näher erläutert.

### In den Zeichnungen zeigen:

Fig. 1 einen Axialschnitt durch ein Magnetventil im geöffneten Zustand;
Fig. 2 in einer Darstellung analog Fig. 1 das Ventil im geschlossenen Zustand.

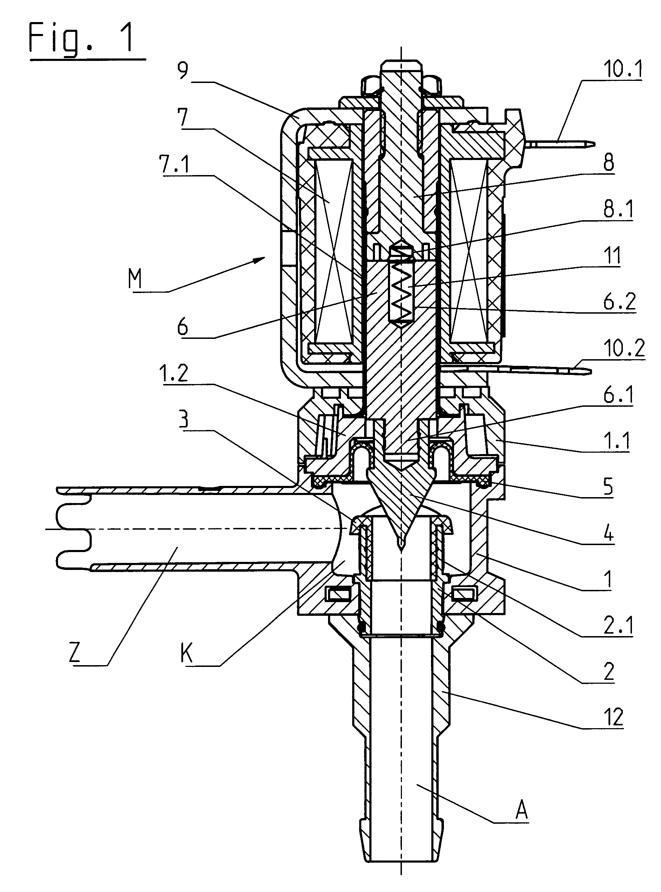

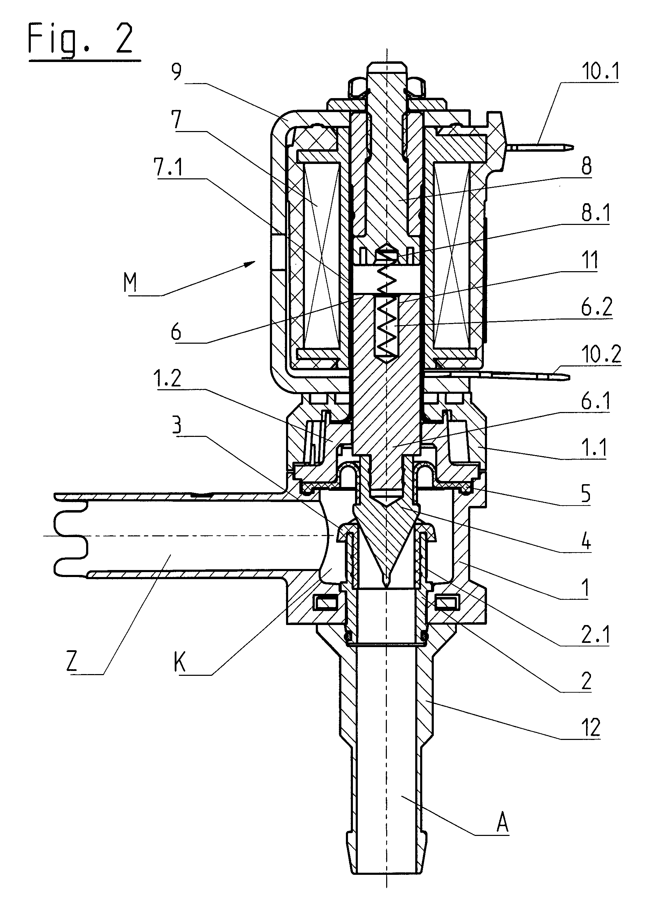

Das in den Figuren 1 und 2 dargestellte Elektromagnetventil, das insbesondere als Getränkeablaufventil, beispielsweise als Auslaufventil an Heißgetränkeautomaten, gedacht ist, besitzt ein Ventilgehäuse 1, in dem eine Ventilkammer K angeordnet ist. In die Ventilkammer K mündet ein Zufluß Z. An der Unterseite des Gehäuses 1 befindet sich ein Unterteil 12, das den nach unten herausgeführten Abfluß A aufweist. Die Oberseite des Gehäuses 1 ist mit einem Deckel 1.1 abgeschlossen und oberhalb dieses Deckels 1.1 ist ein Magnetsystem M angeordnet, das weiter unten näher erläutert wird.

In das Gehäuse 1 ist ein Ventilsitz 2 eingesetzt, der als zylindrisches Rohrstück ausgebildet ist, das mit einem oberen Abschnitt in die Ventilkammer K hineinragt. Über den Ventilsitz 2 ist die Ventilkammer K mit dem Abfluß A verbunden. Das zylindrische Rohrstück 2 besteht aus einem harten Material, beispielsweise aus Metall, Keramik oder einem harten Kunststoff. An seinem oberen, in die Ventilkammer K hineinragenden Teil 2.1 trägt es eine die Endkante umfassende und in das Rohr hineingeführte und die Innenwand des Rohrstücks auskleidende Manschette 3 aus einem weichen, gummielastischen Material. Dem Ventilsitz, d.h. dieser Manschette 3 gegenüber liegt der als Dichtungskegel 4 ausgebildete Ventilteller, der aus einem Material besteht, das eine wesentlich größere Härte besitzt als das Material der Manschette 3. Der Dichtungskegel 4 ist über einen Zapfen 6.1 am unteren Ende eines Magnetankers 6 befestigt, der im Innenraum der Magnetspule 7 in einem Führungsrohr 7.1 geführt ist, dessen unteres Ende zwischen dem Gehäusedeckel 1.1 und einem Einsatzstück 1.2 eingespannt ist. Eine als Rollmembran ausgebildete Trennmembran 5, die mit ihrem inneren Ende am Dichtungskegel 4 und mit ihrem Außenrand zwischen dem Einsatzstück 1.2 und dem Gehäuse 1 befestigt ist, trennt den Innenraum des Magnetsystems dichtend von der Ventilkammer K. Im Oberteil der Magnetspule 7 befindet sich ein Polstück 8, das mit einem die Magnetspule umfassenden Magnetjoch 9 verbunden ist und dessen Lage innerhalb der Magnetspule 7 in axialer Richtung veränderbar ist. Zwischen dem Magnetanker 6 und dem Polstück 8 befindet sich eine Schraubendruckfeder 11, die einerseits in einer axialen Sacklochbohrung 6.2 des Magnetankers 6 und andererseits in einer entsprechenden Bohrung 8.1 des Polstücks 8 geführt ist und die den Schließdruck des Ventils bestimmt. In dem in Fig. 1 dargestellten geöffneten Zustand des Ventils liegt der Magnetanker 6 am Polstück 8 an. Der Ventilhub kann durch Verstellen des Polstücks 8 geändert werden.

Die Stromversorgung der Magnetspule 7 geschieht über die elektrischen Anschlüsse 10.1 und 10.2.

Die Funktionsweise des Ventils ist aus den Fig. 1 und 2 ohne weiteres abzulesen. Im erregten Zustand der Magnetspule 7 wird, wie in Fig. 1 gezeigt, der Magnetanker 6 gegen die Kraft der Schraubendruckfeder 11 nach oben gezogen, bis er am Polstück 8 anliegt. In diesem Zustand hebt der Dichtungskegel 4 von der Dichtungsmanschette 8 des Ventilsitzes ab und das Ventil ist geöffnet. Im entregten Zustand der Magnetspule 7 drückt die Schraubendruckfeder 11 den Magnetanker 6 und damit den Dichtungskegel 4 nach unten, so daß der Dichtungskegel 4 in den Innenraum des Rohrstücks 2 und der Manschette 3 eindringt und sich die Mantelfläche des Kegels auf die Innenkante der Öffnung der Manschette 3 auflegt. Das Ventil ist geschlossen. Der Kegelwinkel des Dichtungskegels 4 kann entsprechend den gewünschten Verformungskräften eingestellt werden.

Durch die Verformung der Manschette 3 beim jeweiligen Aufsetzen des Dichtungskegels 4 werden vorhandene Kalkablagerungen abgesprengt.

## Patentansprüche

1. Elektromagnetventil, insbesondere Getränkeablaufventil, mit einem Ventilgehäuse, in dem eine Ventilkammer angeordnet ist, die mit einem Zuflußkanal direkt und mit einem Abflußkanal über einen Ventilsitz verbunden ist, und mit einem am Ventilgehäuse angeordneten Magnetsystem mit einer Magnetspule, in welcher ein unter Federkraft stehender Magnetanker geführt ist, der an seinem dem Ventilsitz zugekehrten Ende einen Ventilteller trägt, **dadurch gekennzeichnet, daß** der Ventilsitz als zylindrisches Rohrstück (2) ausgebildet ist, das zumindest an dem dem Ventilteller (4) zugewandten Ende aus einem weichen, gummielastischen Material besteht oder mit einem solchen Material umkleidet ist, und der Ventilteller (4) als beim Schließen des Ventils mit seiner Spitze in das zylindrische Rohrstück (2) eintauchender Dichtungskegel mit vorgegebenem Kegelwinkel ausgebildet ist und aus einem Material besteht, das eine wesentlich größere Härte besitzt als das Material am ihm gegenüberliegenden Ende des Ventilsitzes.

2. Elektromagnetventil nach Anspruch 1, **dadurch gekennzeichnet, daß** der Dichtungskegel aus Metall besteht und als Material an dem dem Ventilteller (4) zugewandten Ende des den Ventilsitz bildenden Rohrstücks (2) ein elastomerer Kunststoff dient.

3. Elektromagnetventil nach Anspruch 1 oder 2, **dadurch gekennzeichnet, daß** das den Ventilsitz bildende Rohrstück (2) aus einem harten Kunststoffmaterial besteht und in das Rohrstück (2) an seinem dem Ventilteller (4) zugewandten Ende (2.1) eine die Endkante umfassende und auf einem vorgegebenen Längenabschnitt die Innenwand des Rohrstücks auskleidende Manschette (3) eingesetzt ist.

4. Elektromagnetventil nach einem der Ansprüche 1 bis 4, **dadurch gekennzeichnet, daß** dem Magnetanker (6) des Magnetsystems (M) an dem vom Ventilteller (4) abgewandten Ende ein im Oberteil der Magnetspule (7) angeordnetes Polstück (8) gegenüberliegt, dessen Lage innerhalb der Magnetspule (7) in axialer Richtung einstellbar ist, und zwischen dem Polstück (8) und dem Magnetanker (6) eine die Schließkraft bestimmende Schraubendruckfeder (11) angeordnet ist.
